# FASCICULE DE BREVET EUROPEEN

(11) **EP 2 817 133 B1**
(45) Date de publication et mention de la délivrance du brevet: **01.02.2017**
(21) Numéro de dépôt: 13710499.8
(22) Date de dépôt: 21.02.2013
(51) Int. Cl.: B29C 33/38, B29C 33/40, B29C 67/00, B29C 70/30, B29C 70/44, B29C 70/54, B29K 307/04, B29L 31/00, B29L 31/08

(54) **PROCEDE DE PRODUCTION D'OUTILLAGE DE MOULAGE PAR TRANSFERT DE RESINE**
VERFAHREN ZUR HERSTELLUNG EINER EINRICHTUNG ZUM FORMEN MITTELS HARZTRANSFER
METHOD FOR PRODUCING EQUIPMENT FOR MOULDING BY RESIN TRANSFER

(30) Priorité: 23.02.2012 FR 1251652
(43) Date de publication de la demande: 31.12.2014
(73) Titulaire: SNECMA, 75015 Paris (FR)
(72) Inventeur: LESIZZA, Emilie, F-77550 Moissy-cramayel (FR); MAGNAUDEIX, Dominique, F-77550 Moissy-cramayel (FR)
(74) Mandataire: Calvo de Nó, Rodrigo
(86) Numéro de dépôt international: PCT/FR2013/050358
(87) Numéro de publication internationale: WO 2013/124589

(56) Documents cités:
- FR-A1- 2 864 801
- US-A- 3 035 310
- US-A1- 2008 241 296
- US-A1- 2009 218 723
- MULLER J: "WERKZEUGE AUS FASERVERSTARKTEN KUNSTSTOFFEN FUR HOCHLEISTUNGSBAUTEILE", KUNSTOFFE INTERNATIONAL, CARL HANSER VERLAG, MUNCHEN, DE, vol. 79, no. 2, 1 février 1989 (1989-02-01), pages 140-145, XP000028766, ISSN: 0023-5563

## Description

### Arrière-plan de l'invention

La présente invention concerne le domaine de la production d'éléments en matériau composite. Plus particulièrement, la présente invention concerne un procédé de production d'outillage pour le moulage d'une pièce par transfert de résine (en anglais « Resin Transfer Molding » ou « RTM »), ainsi qu'un outillage produit suivant ce procédé.

Dans un procédé RTM, une préforme textile est introduite dans une cavité de moulage d'un moule. Après fermeture du moule, une résine thermodurcissable est injectée à pression dans la cavité par des canaux d'injection. Cette pression est maintenue dans la cavité pendant une période de durcissement de la résine, pendant laquelle la température est augmentée afin de promouvoir ce durcissement. Après démoulage, on obtient ainsi une pièce composite en plastique thermodurci renforcé par les fibres de la préforme textile, avec une forme et des dimensions précises, qui ne nécessiteront normalement qu'un post-traitement limité. De cette manière, le procédé de moulage par transfert de résine ou « RTM » permet la production de pièces composites en série.

Pendant le procédé RTM, la préforme textile peut être soumise à d'importantes contraintes. Bien que des moyens de simulation permettent dans une certaine mesure d'évaluer ces contraintes à l'avance afin de définir une préforme résultant dans le produit souhaité, on continue toutefois à procéder à une étape de validation de la préforme, permettant de contrôler l'éventuel décadrage des fibres et leur distribution et densité dans le produit final, ainsi que la déformation globale de ce produit, la facilité de mise en forme de la préforme, et autres paramètres de production. Pour procéder à cette validation par des essais de production, un outillage de production par procédé RTM est toutefois nécessaire.

L'outillage utilisé pour le moulage par transfert de résine est similaire à celui utilisé, dans la plasturgie conventionnelle, pour le moulage par injection. Il comprend ainsi un moule, typiquement métallique, avec une cavité de moulage dont l'usinage nécessite normalement une grande précision et des tolérances très étroites. En outre, afin de permettre l'évolution de la température dans la cavité de moulage normalement requise pour le durcissement de la résine, des moyens de chauffage, voire de refroidissement, doivent normalement être agencés dans le moule. En conséquence, la mise en oeuvre d'un tel outillage définitif pour les essais de validation de la préforme prendrait un temps excessif et aurait un coût très élevé en cas d'échec.

L'usinage dans la masse d'un outillage métallique préliminaire simplifié présente toutefois d'autres inconvénients. Un moule métallique massif ne permettrait pas la reproduction des rampes de montée en température souhaitées pour l'outillage définitif de production. En outre, l'usinage dans la masse de cet outillage peut prendre un temps précieux.

Des procédés de production d'outillage de moulage en matériau composite ont été proposés dans la publication de demande de brevet français FR 2 864 801 A1, dans la publication de demande de brevet US 2009/218723 A1 et dans le brevet US 3 035 310 A. Toutefois, la précision des outillages obtenus par ces méthodes est limitée.

### Objet et résumé de l'invention

La présente invention vise à remédier à ces inconvénients. En particulier, l'invention vise à proposer un procédé qui permette une production rapide et économique d'un outillage préliminaire pour les essais de validation de préformes pour moulage par transfert de résine. Un tel outillage comprendra au moins deux demi-coquilles, agencées de manière à pouvoir être séparées pour introduire la préforme dans la cavité de moulage et pour en extraire la pièce moulée après sa cuisson, mais hermétiquement fermées l'une contre l'autre pendant les étapes d'injection et de cuisson du moulage par transfert de résine.

Dans au moins un mode de réalisation, ce but est atteint grâce au fait que le procédé comporte les étapes suivantes :
production d'un modèle de la pièce à mouler ;
production d'un contre-moule avec une surface externe présentant une concavité complémentaire d'un premier côté dudit modèle ;
placement dudit modèle dans ladite concavité du contre-moule ;
drapage de plusieurs couches textiles superposées, imprégnées de résine thermodurcissable, sur le modèle et ladite surface externe du contre-moule, afin de mettre en forme une première demi-coquille ;
cuisson de ladite première demi-coquille ;
séparation du contre-moule du modèle et de la première demi-coquille ;
drapage de plusieurs couches textiles superposées sur la première demi-coquille et le premier côté du modèle, afin de mettre en forme une deuxième demi-coquille; et
cuisson de la deuxième demi-coquille.

Grâce à ces dispositions, les deux demi-coquilles obtenues de cette manière peuvent définir ensemble une cavité de moulage pouvant être ouverte pour l'introduction de la préforme, fermée pendant l'injection de la résine et la cuisson, et rouverte pour le démoulage de la pièce. Comme la deuxième demi-coquille est mise en forme directement sur la première demi-coquille, les deux demi-coquilles peuvent présenter, autour de cette cavité de moulage, des surfaces de contact parfaitement complémentaires permettant ainsi d'assurer une bonne étanchéité de la cavité de moulage. Afin de former des canaux d'injection et d'évacuation et/ou des rainures destinées à recevoir des joints d'étanchéité, leur relief peut être directement usiné dans les surfaces de contact des demi-coquilles, et/ou être formé sur le contre-moule.

En outre, les parois de ces demi-coquilles peuvent être comparativement fines, ce qui permet un meilleur transfert thermique, et donc une reproduction plus fidèle des conditions de cuisson lors de la production en série dans un moule définitif, et en particulier des rampes de montée en température. Afin d'assurer la rigidité de la cavité de moulage dans cet outillage préliminaire, celui-ci peut recevoir des renforts et raidisseurs en fonction des efforts et contraintes auxquels il sera soumis lors des essais de validation de la préforme. Il faut noter que, par « couche textile » on entend une couche formée par des fibres solidaires, pouvant être une couche tissée, mais aussi, alternativement, une couche unidirectionnelle, avec des fibres longues orientées exclusivement dans une seule direction, ou même une couche de fibres courtes non-tissées.

Les couches textiles de la première et/ou de la deuxième demi-coquille peuvent comprendre des fibres de carbone, lesquelles offrent une rigidité élevée et une bonne conductivité thermique. Toutefois, des matériaux alternatifs, comme par exemple la fibre de verre, peuvent être envisagés suivant les contraintes mécaniques et thermiques des demi-coquilles. Ces couches textiles peuvent aussi être des couches pré-imprégnées, c'est-à-dire imprégnées de résine thermodurcissable avant le drapage pour ainsi simplifier les opérations nécessaires pour ce drapage et assurer une bonne distribution de la résine. Alternativement, toutefois, elles pourraient aussi être imprégnées pendant le drapage.

Avant leurs respectives cuissons, les première et deuxième demi-coquilles peuvent être mises sous vide sous une bâche étanche pour obtenir un matériau composite à moindre porosité et plus grand taux de fibre.

Il est important de pouvoir assurer la fermeture de l'outillage pendant les étapes d'injection et cuisson du procédé de moulage par transfert de résine. Pour cela, suivant une première alternative, chaque demi-coquille présente au moins un orifice aligné avec un orifice correspondant de l'autre demi-coquille pour le passage d'un dispositif de serrage de la première demi-coquille contre la deuxième demi-coquille. Ces orifices peuvent être percés dans les demi-coquilles après leur cuisson, ou bien être formés lors de la mise en forme. En particulier, des inserts métalliques comprenant ces orifices et renforçant leur pourtour peuvent être intégrés dans les demi-coquilles lors de leur mise en forme.

Par contre, suivant une deuxième alternative, le procédé de production d'outillage peut comporter en outre au moins les étapes suivantes :
- coulée d'un matériau fluide durcissable dans des faces arrière concaves des première et deuxième demi-coquilles ; et
- durcissement dudit matériau fluide durcissable dans lesdites faces arrière concaves.

De cette manière, chaque demi-coquille formera un bloc solide, les deux demi-coquilles pouvant être pressées l'une contre l'autre dans une presse pour assurer la fermeture de l'outillage pendant les étapes d'injection et cuisson du procédé de moulage par transfert de résine. On entend par « face avant » de chaque demi-coquille la face en contact avec l'autre demi-coquille lorsque celles-ci sont fermées l'une contre l'autre, et par « face arrière » la face opposée à la face avant.

Ledit matériau fluide durcissable peut être, par exemple du béton, lequel, après son durcissement, présente une bonne résistance à la compression et une bonne stabilité thermique aux températures normalement utilisées dans les procédés de moulage par transfert de résine.

En outre, afin de maintenir une bonne conductivité thermique des deux demi-coquilles, le matériau fluide durcissable peut comprendre des particules thermiquement conductrices, par exemple des particules métalliques.

Le modèle de la pièce à mouler peut être produit par un procédé de prototypage rapide, tel que, par exemple, la stéréolithographie, le frittage laser, le modelage par dépôt en fusion ou l'usinage rapide. Un tel procédé permet de produire un tel modèle physique rapidement et avec des tolérances de fabrication étroites, à partir de modèles virtuels de cette pièce.

L'invention concerne également l'outillage produit par ce procédé de production d'outillage.

### Brève description des dessins

L'invention sera bien comprise et ses avantages apparaîtront mieux, à la lecture de la description détaillée qui suit, de plusieurs modes de réalisation représentés à titre d'exemple non limitatif. La description se réfère aux dessins annexés sur lesquels :
- la figure 1 est une illustration schématique de plusieurs étapes d'un procédé suivant un mode de réalisation de l'invention ;
- la figure 2A est une vue schématique en perspective éclatée d'un outillage suivant un premier mode de réalisation de l'invention ;
- les figures 2B et 2C sont des vues en perspective des faces avant et arrière d'une première partie de moule de l'outillage de la figure 2A;
- la figure 3A est une vue schématique en perspective éclatée d'un outillage suivant un deuxième mode de réalisation de l'invention ;
- la figure 3B est une vue en perspective de la face arrière d'une première partie de moule de l'outillage de la figure 3A.

### Description détaillée de l'invention

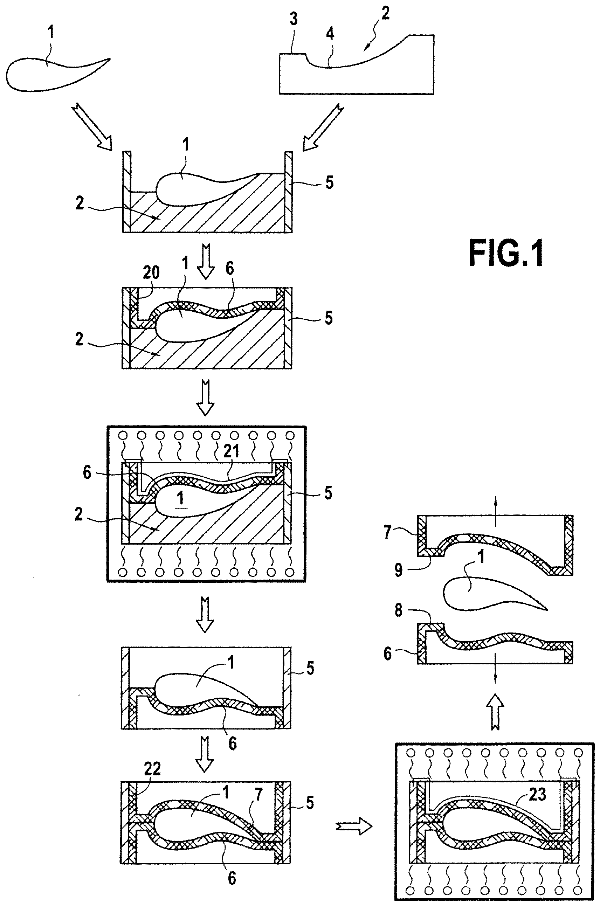

Les étapes initiales d'un procédé de production d'outillage pour le moulage d'une pièce par transfert de résine suivant un mode de réalisation de l'invention sont illustrées schématiquement sur la figure 1.

Dans une première étape, un modèle 1 de la pièce à mouler est produit par un procédé de prototypage rapide, par exemple par stéréolithographie, à partir d'un modèle virtuel de cette pièce. Parallèlement, un contre-moule 2 est produit, par exemple par usinage d'un bloc de mousse synthétique rigide ou d'aggloméré de bois. Ce contre-moule 2 présente, sur une surface 3, une concavité 4 complémentaire d'un premier côté du modèle 1. Autour de cette concavité 4, la surface 3 du contre-moule 2 reproduit le contour d'une surface 8 de fermeture du moule munie de canaux d'injection 24 et d'évacuation 25, ainsi que d'une rainure 26 destiné à recevoir un joint étanche autour de la cavité de moulage.

Dans une deuxième étape, on procède à placer le modèle 1 dans la concavité 4, pour draper, la surface 3 et le côté exposé du modèle 1, des couches textiles en fibre de carbone pré-imprégnées de résine thermodurcissable, comme par exemple une résine époxy, afin de mettre en forme une première demi-coquille 6. Ce drapage peut s'effectuer dans un caisson 5, permettant ainsi la formation de parois latérales 20 sur le pourtour de la première demi-coquille 6. Ensuite, cette première demi-coquille 6 est mise à vide sous une bâche étanche 21 et cuite, par exemple dans un autoclave, afin de durcir la résine.

Après cette étape de cuisson, le contre-moule 2 est retiré pour exposer la face avant de la première demi-coquille 6 et le premier côté du modèle 1, et dans une deuxième étape de drapage d'autres couches textiles en fibre de carbone pré-imprégnées de résine thermodurcissable sont drapées sur ceux-ci pour former une deuxième demi-coquille 7. Comme pour la première demi-coquille 6, le caisson 5 permet la formation de parois latérales 22 sur le pourtour de la deuxième demi-coquille 7. Ensuite, cette deuxième demi-coquille 7 est aussi mise à vide sous une bâche étanche 23 et cuite, par exemple dans un autoclave, afin de durcir la résine.

Après cette cuisson et l'extraction du modèle 1, on obtient ainsi deux demi-coquilles 6,7 dont les faces avant, mises l'une contre l'autre, définissent une cavité de moulage pouvant être utilisée pour le moulage par transfert de résine de prototypes servant, par exemple, à la vérification de préformes. Autour de cette cavité de moulage, les faces avant des demi-coquilles 6,7 présentent des surfaces 8,9 parfaitement complémentaires afin d'assurer l'étanchéité de la cavité de moulage quand les demi-coquilles 6, 7 sont fermées l'une contre l'autre. Pour assurer que ces demi-coquilles 6,7 aient la rigidité nécessaire pour cet emploi, l'épaisseur de leurs parois et le positionnement d'éventuels raidisseurs sur leurs faces arrière peut avoir été préalablement défini à l'aide de procédés et systèmes de modélisation. En outre, pour obtenir des surfaces lisses et sensiblement libres de porosités, les faces avant des deux demi-coquilles 6,7 peuvent être traitées avec un enduit bouche-pores, tel que ceux vendus par la société Airétec® sous la marque Cirex®.

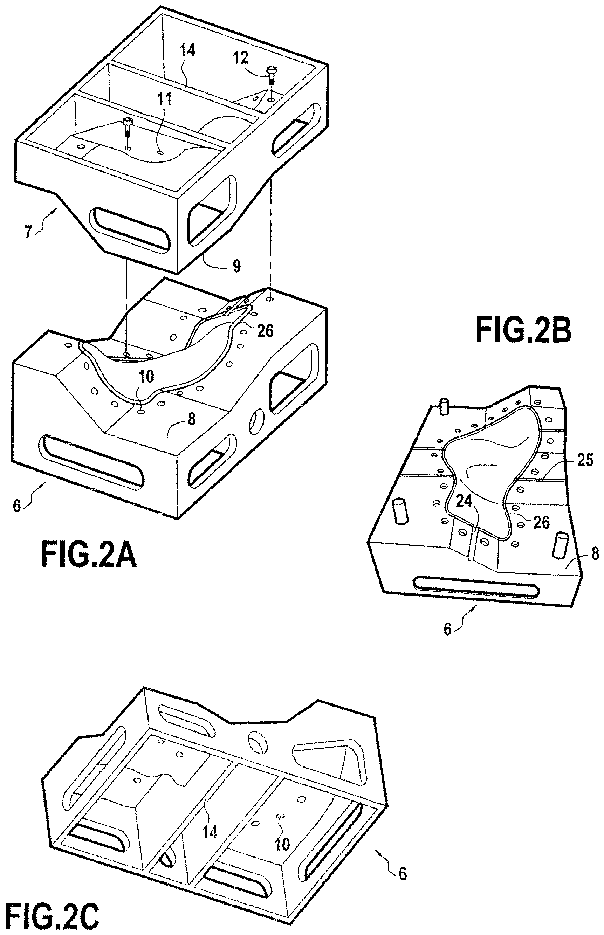

Pendant les étapes d'injection et cuisson du moulage par transfert de résine il est aussi important d'assurer la fermeture de l'outillage pour maintenir des pressions de l'ordre de 2 MPa (20 bars) à l'intérieur de la cavité de moulage. Pour cela, dans un premier mode de réalisation, illustré en particulier sur les figures 2A à 2C, les deux demi-coquilles 6,7 présentent, sur leurs respectives surfaces complémentaires de fermeture 8,9, des orifices 10,11 pour le passage de boulons 12. Ces orifices 10, 11 sont arrangés autour de la cavité de moulage, et chacun des orifices 10 de la première partie 6 est aligné avec un orifice 11 correspondant de la deuxième partie 7, de manière à pouvoir fermer l'outillage en serrant les boulons 12 avec des écrous (non illustrés). Dans le mode de réalisation illustré, les orifices 10 et 11 ont été formés lors de la mise en forme de chaque demi-coquille 6,7, en y incorporant des inserts métalliques. Ainsi, ces inserts métalliques définissent les orifices 10 et 11 et simultanément renforcent la périphérie de chaque orifice. Alternativement, toutefois, ils peuvent être percés dans les surfaces complémentaires de fermeture 8, 9 dans une étape supplémentaire après la cuisson et le démoulage des deux parties de moule 6,7. De la même manière, les canaux d'injection et d'évacuation et/ou la rainure du joint d'étanchéité peuvent aussi être usinés dans les surfaces 8,9 après la cuisson des demi-coquilles 6,7, au lieu d'être moulés sur le contre-moule.

Comme illustré sur les figures 2A et 2C, des raidisseurs 14 dans les revers 15, 16 de chaque partie de moule 6,7 assurent leur rigidité pendant le procédé RTM. L'outillage suivant ce premier mode de réalisation peut être introduit fermé dans un autoclave pour effectuer au moins l'étape de cuisson du procédé RTM.

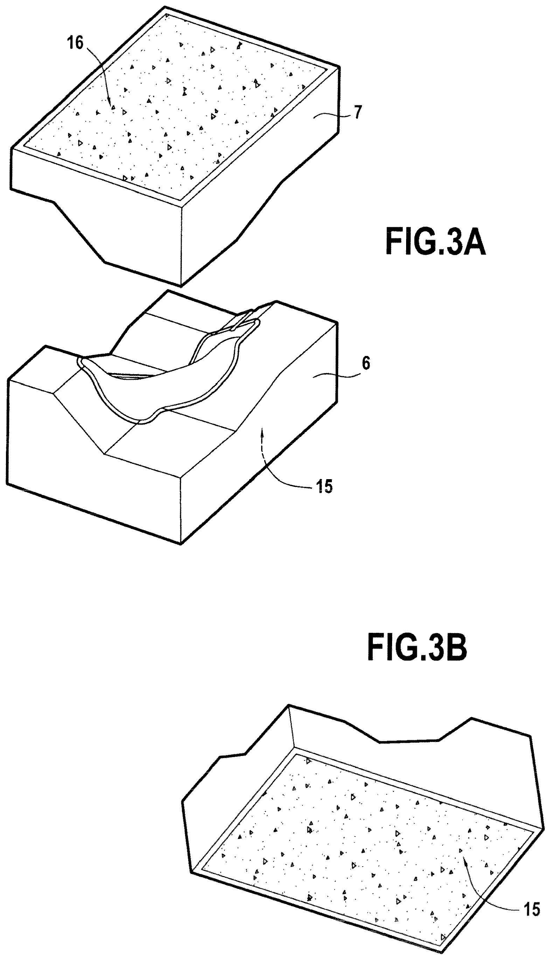

Dans un deuxième mode de réalisation illustré par les figures 3A et 3B, les faces arrière 15, 16 de chaque partie de moule 6,7, limitées par les parois 20, 22, ont été remplies, après la cuisson de chaque partie de moule 6, 7, d'un matériau fluide durcissable, afin de former deux blocs massifs. En particulier, dans le mode de réalisation illustré, le matériau fluide durcissable peut être du béton chargé en particules métalliques thermiquement conductrices, pour ainsi pouvoir assurer un réchauffement et/ou refroidissement rapides de la cavité de moulage lors de l'utilisation de cet outillage dans un procédé RTM. Dans ce deuxième mode de réalisation, la fermeture de l'outillage peut être assurée par une presse poussant en directions opposées sur les faces arrière 15, 16 des deux parties de moule 6, 7, pour ainsi pousser les faces avant l'une contre l'autre.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. Par exemple, bien que les modes de réalisation illustrés concernent exclusivement la production de moules en deux parties, il serait aussi envisageable d'utiliser le procédé de l'invention pour produire des moules avec un plus grand nombre des parties pour le moulage de pièces à formes plus complexes. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Procédé de production d'outillage pour le moulage d'une pièce par transfert de résine, comportant au moins les étapes suivantes :
production d'un modèle (1) de ladite pièce ;
production d'un contre-moule (2) avec une surface externe (3) présentant une concavité (4) complémentaire d'un premier côté dudit modèle (1) ;
placement dudit modèle (1) dans ladite concavité du contre-moule (2) ;
drapage de plusieurs couches textiles superposées, imprégnées de résine thermodurcissable, sur le modèle (1) et ladite surface externe du contre-moule (2), afin de mettre en forme une première demi-coquille (6) ;
cuisson de ladite première demi-coquille (6) ;
séparation du contre-moule (2) du modèle (1) et de la première demi-coquille (6) ;
drapage de plusieurs couches textiles superposées sur la première demi-coquille (6) et le premier côté du modèle, afin de mettre en forme une deuxième demi-coquille (7) ;
cuisson de la deuxième demi-coquille (7).

2. Procédé suivant la revendication 1, dans lequel chaque demi-coquille (6,7) présente au moins un orifice (10,11) aligné avec un orifice correspondant de l'autre demi-coquille (7,6) pour le passage d'un dispositif (12) de serrage de la première demi-coquille (6) contre la deuxième demi-coquille (7).

3. Procédé suivant la revendication 1, comportant en outre au moins les étapes suivantes :
coulée d'un matériau fluide durcissable dans des faces arrière concaves (15,16) des première et deuxième demi-coquilles (6,7) ; et
durcissement dudit matériau fluide durcissable dans lesdites faces arrière concaves (15,16).

4. Procédé suivant la revendication 3, dans lequel ledit matériau fluide durcissable comprend des particules thermiquement conductrices.

5. Procédé suivant l'une quelconque des revendications 3 ou 4, dans lequel ledit matériau fluide durcissable est du béton.

6. Procédé suivant l'une quelconque des revendications précédentes, dans lequel lesdites couches textiles comprennent des fibres de carbone.

7. Procédé suivant l'une quelconque des revendications précédentes, dans lequel lesdites couches textiles sont imprégnées de résine thermodurcissable avant le drapage.

8. Procédé suivant l'une quelconque des revendications précédentes, dans lequel le modèle (1) est produit par un procédé de prototypage rapide.

## Patentansprüche

1. Verfahren zur Herstellung einer Einrichtung zum Formen eines Teils durch Harztransfer, umfassend mindestens die folgenden Schritte:
Herstellung eines Modells (1) des Teils,
Herstellung einer Gegenform (2) mit einer Außenfläche (3), die eine komplementäre Konkavität (4) zu einer ersten Seite des Modells (1) aufweist,
Anordnung des Modells (1) in der Konkavität der Gegenform (2),
Aufbringen mehrerer übereinanderliegender Textilschichten, die mit duromerem Harz imprägniert sind, auf dem Modell (1) und der Außenfläche der Gegenform (2), um eine erste Halbschale (6) zu formen,
Erwärmen der ersten Halbschale (6),
Trennen der Gegenform (2) von dem Modell (1) und der ersten Halbschale (6),
Aufbringen mehrerer übereinanderliegender Textilschichten auf die erste Halbschale (6) und die erste Seite des Modells, um eine zweite Halbschale (7) zu formen,
Erwärmen der zweiten Halbschale (7).

2. Verfahren nach Anspruch 1, bei dem jede Halbschale (6, 7) mindestens eine Öffnung (10, 11) aufweist, die mit einer entsprechenden Öffnung der anderen Halbschale (7, 6) fluchtend ist, um feine Vorrichtung (12) zum Spannen der ersten Halbschale (6) gegen die zweite Halbschale (7) durchzuführen.

3. Verfahren nach Anspruch 1, ferner umfassend mindestens die folgenden Schritte:
Gießen eines härtbaren flüssigen Materials in konkave Rückseiten (15, 16) der ersten und zweiten Halbschalen (6, 7), und
Härten des härtbaren flüssigen Materials in den konkaven Rückseiten (15, 16).

4. Verfahren nach Anspruch 3, bei dem das härtbare flüssige Material wärmeleitende Partikel umfasst.

5. Verfahren nach einem der Ansprüche 3 oder 4, bei dem das härtbare flüssige Material Beton ist.

6. Verfahren nach einem der vorhergehenden Ansprüche, bei dem die Textilschichten Kohlefasern umfassen.

7. Verfahren nach einem der vorhergehenden Ansprüche, bei dem die Textilschichten mit duromerem Harz vor dem Aufbringen imprägniert werden.

8. Verfahren nach einem der vorhergehenden Ansprüche, bei dem das Modell (1) durch ein Rapid-Prototyping-Verfahren hergestellt wird.

## Claims

1. A method of producing tooling for molding a part by resin transfer molding, the method comprising at least the following steps:
· producing a model (1) of said part;
· producing a countermold (2) with an outside surface (3) presenting an indentation (4) complementary to a first side of said model (1);
· placing said model (1) in said indentation of the countermold (2);
· draping a plurality of superposed textile layers that are impregnated with thermosetting resin on the model (1) and on said outside surface of the countermold (2) in order to shape a first half-shell (6);
· curing said first half-shell (6);
· separating the countermold (2) from the model (1) and from the first half-shell (6);
· draping a plurality of superposed textile layers on the first half-shell (6) and the first side of the model, in order to shape a second half-shell (7); and
· curing the second half-shell (7).

2. A method according to claim 1, wherein each half-shell (6, 7) presents at least one orifice (10, 11) in alignment with a corresponding orifice in the other half-shell (7, 6) for passing a device (12) for clamping the first half-shell (6) against the second half-shell (7).

3. A method according to claim 1, further including at least the following steps:
· casting a hardenable fluid material into the concave rear faces (15, 16) of the first and second half-shells (6, 7); and
· hardening said hardenable fluid material in said concave rear faces (15, 16).

4. A method according to claim 3, wherein said hardenable fluid material includes thermally conductive particles.

5. A method according to claim 3 or claim 4, wherein said hardenable fluid material is concrete.

6. A method according to any preceding claim, wherein said textile layers comprise carbon fibers.

7. A method according to any preceding claim, wherein said textile layers are impregnated with thermosetting resin before draping.

8. A method according to any preceding claim, wherein the model (1) is produced by a rapid prototyping method.
